**Europäisches Patentamt**

**European Patent Office**

**Office européen des brevets**

(19)

(11) Numéro de publication : **0 233 827
B1**

# (12) FASCICULE DE BREVET EUROPÉEN

(45) Date de publication du fascicule du brevet :
**19.07.89**

(21) Numéro de dépôt : **87420031.4**

(22) Date de dépôt : **04.02.87**

(51) Int. Cl.⁴ : **F 16 K 27/02**

(54) **Dispositif de fixation d'une vanne à une conduite de fluide et procédé de montage.**

(30) Priorité : **06.02.86 FR 8602276**

(43) Date de publication de la demande :
**26.08.87 Bulletin 87/35**

(45) Mention de la délivrance du brevet :
**19.07.89 Bulletin 89/29**

(84) Etats contractants désignés :
**AT BE CH DE ES FR GB IT LI LU NL SE**

(56) Documents cités :
**CA—A— 1 080 196
FR—A— 1 552 564
US—A— 3 531 081
US—A— 3 910 552**

(73) Titulaire : **OREG (Société anonyme)
Z.I des Barillettes
F-73230 Saint Alban Leysse (FR)**

(72) Inventeur : **Gaime, Jean-Pierre
10, rue du Clos Vermont
Barberaz F-73000 Chambery (FR)**

(74) Mandataire : **de Beaumont, Michel
Cabinet Poncet 7, chemin de Tillier B.P. 317
F-74008 Annecy Cédex (FR)**

## Description

La présente invention concerne le montage de vannes permettant le réglage de débit d'un fluide, en bout d'une conduite ou en position intermédiaire entre deux conduites.

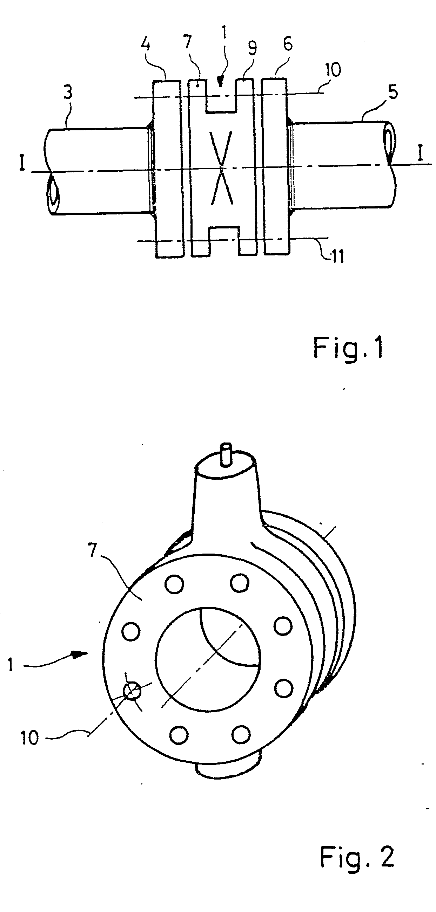

La figure 1 représente une vue en coupe schématique d'une vanne 1 disposée entre deux conduites 3 et 5, et la figure 2 représente une vue en perspective partielle schématique d'une telle vanne. Pour fixer la vanne à chacune des conduites, on opère classiquement en soudant d'abord à chacune des conduites une bride annulaire, respectivement 4 et 6, puis en fixant par des moyens appropriés ces brides annulaires au corps de la vanne 1.

De façon classique (voir p. ex. US-A-3 531 081), les moyens prévus sur la vanne 1 pour permettre l'accrochage avec les brides 4 et 6 sont ménagés dans le corps de vanne lui-même, c'est-à-dire notamment qu'ils sont constitués en le même matériau que ce corps de vanne. L'un des moyens classiques pour assurer la fixation entre les brides et le corps de vanne est de prévoir des flasques en saillie 7 et 9 à la périphérie du corps de vanne de part et d'autre de celui-ci, ces flasques comprenant des alésages correspondant à des alésages prévus sur les brides 4 et 6, comme cela est schématisé en figure 1 par des traits d'axes 10 et 11. Les alésages dans les flasques 7 et 9 peuvent être de simples trous, ou encore des encoches, pour permettre le passage d'un tirant ou d'un boulon allant d'une bride à l'autre. Ces alésages peuvent également être taraudés pour permettre l'insertion de vis de fixation. On notera que l'avantage de prévoir des taraudages est que cela permet de simplifier le montage dans les cas où l'on veut que le corps de vanne 1 puisse être fixé ou bien à une extrémité de conduite ou bien entre deux conduites.

Le procédé classique pour monter une vanne selon le mode de fixation indiqué en figure 1 entre deux conduites 3 et 5 consiste à fixer provisoirement le corps de vanne 1 aux brides 4 et 6 de façon que le moyen d'accrochage entre ces brides et ce corps de vanne soit convenablement positionné, à préfixer par quelques points de soudure chacune des brides à la conduite correspondante, à libérer le corps de vanne des brides, à souder les brides 4 et 6 aux conduites 3 et 5 puis à placer la vanne en position et à fixer les moyens de verrouillage vanne-brides.

Un inconvénient de ce procédé de montage est qu'il amène à pré-positionner la vanne puis à l'enlever avant de la remettre en place, ce qui exige des manipulations qui peuvent être génératrices de dommages. Un autre inconvénient est que le monteur peut être tenté, pour accélérer le montage, de fixer en une seule fois les brides par soudage aux conduites. Une telle manœuvre est susceptible de fausser la vanne et/ou de détériorer les joints de cette vanne par suite de l'échauffement lié à l'opération de soudure ou de brasure.

Indépendamment de ces inconvénients du procédé de montage, le mode de montage lui-même présente de nombreux inconvénients pratiques. Etant donné que les moyens d'accrochage sur la vanne sont constitués de parties du corps de vanne solidaires de ce corps et que ces parties d'accrochage doivent être constituées de matériaux particulièrement résistants, couramment de l'acier, cela oblige à construire tout le corps de vanne en un tel matériau, d'où il résulte un coût de matière important. Un autre inconvénient du procédé de montage précédemment décrit se présente dans le cas des vannes plates qui sont actuellement couramment utilisées pour les circuits de chauffage et de climatisation, et qui peuvent avoir une épaisseur de l'ordre de cinquante millimètres. Dans le cas de telles vannes, l'épaisseur des flasques 7 et 9 devient très faible, nécessairement inférieure à la moitié de l'épaisseur totale de la vanne, et en conséquence, il devient difficile de s'en servir comme alésages taraudés pour des fixations par vis, à moins de prévoir des matériaux extrêmement résistants et des pas de vis appropriés.

Un autre inconvénient des modes de montage classiques dans lesquels les moyens de fixation sont solidaires du corps de vanne est que, pour une vanne donnée, il peut être nécessaire de prévoir des moyens de fixation différents, par exemple en fonction des débits ou des pressions existant dans les tuyaux auxquels on veut solidariser la vanne, ou bien en fonction de normes différentes dans divers pays. Ceci oblige, pour un type de vanne donné, à prévoir des stocks avec diverses variantes de modes de fixations, d'où il résulte une augmentation importante des stocks avec les inconvénients que cela présente.

Un objet de la présente invention est de résoudre ces difficultés des structures de montage et des modes de montage de vannes selon l'art antérieur, en particulier dans le cas de vannes plates.

L'idée mère de la présente invention a été de séparer la fonction de fixation de la vanne de la fonction de corps de vanne elle-même.

Selon une mise en œuvre de cette idée, et pour satisfaire les objets susmentionnés, la présente invention prévoit un dispositif de fixation d'une vanne à une conduite de fluide à l'extrémité d'une conduite ou entre deux conduites, chaque extrémité de conduite étant solidaire d'une bride annulaire, dans lequel la vanne comporte une face latérale périphérique et deux faces extrêmes, caractérisé en ce que :

le dispositif comprend des portions de flasques adaptables selon leur face intérieure sur la face latérale périphérique de vanne en dehors de ses zones d'actionnement,

la face latérale périphérique de vanne et la face intérieure de portion de flasque comprennent des portions engageantes correspondantes pouvant s'emboîter l'une dans l'autre de façon que, lorsque la portion de flasque est plaquée contre la face latérale périphérique de vanne, les parties engageantes limitent le déplacement axial relatif de la vanne par rapport à la portion de flasque,

l'ensemble de ces portions de flasques comporte des alésages qui se trouvent en regard d'alésages correspondants de la ou des brides annulaires une fois les portions de flasques positionnées en appui contre la face latérale périphérique de vanne avec les parties engageantes correspondantes emboîtées les unes dans les autres.

On désigne par direction axiale la direction de l'axe longitudinal I-I de la vanne ou direction de l'alésage principal de vanne parcouru par le fluide.

Selon un mode de réalisation, les parties engageantes correspondantes sont formées d'une part par une rainure périphérique ménagée dans la face périphérique latérale de la vanne, et d'autre part par la position intérieure de la portion de flasque, venant se loger dans ladite rainure. On notera que le caractère annulaire de telles parties engageantes permet, si nécessaire, un réglage de position par rotation axiale de la vanne pendant son montage.

Selon un mode de réalisation de la présente invention, chaque portion de flasque est constituée d'un flasque sensiblement semi-annulaire.

Selon un mode de réalisation de la présente invention, chaque portion de flasque comprend une zone interne venant se loger dans ladite rainure et ayant une première épaisseur et au moins une zone dans laquelle sont ménagés les alésages, cette zone ayant une épaisseur seulement légèrement inférieure à l'épaisseur totale de la vanne.

Selon un mode de réalisation de la présente invention, les portions de flasque et la vanne sont en des matériaux distincts.

Selon un mode de réalisation de la présente invention, lesdits alésages des flasques sont taraudés.

La présente invention prévoit également un procédé de fixation d'une vanne à une conduite de fluide, à l'extrémité d'une conduite ou entre deux conduites, comprenant les étapes suivantes :

prévoir des portions de flasque fixables à la périphérie d'une vanne, ces portions de flasque comprenant des alésages dont l'épaisseur est inférieure à celle de la vanne, ces alésages étant répartis selon une couronne ;

prévoir au moins une bride fixable à l'extrémité d'une conduite ;

pré-assembler provisoirement ladite bride et lesdits alésages, en interposant éventuellement, entre la bride et les alésages, des cales définissant une profondeur totale sensiblement égale à celle de la vanne ;

fixer chaque bride à chaque extrémité de conduite ;

enlever une partie au moins des portions de flasque et les cales, pour laisser un passage latéral permettant l'insertion ultérieure de la vanne ;

insérer l'ensemble de la vanne et des flasques positionnées dans celle-ci ; et
fixer les brides aux portions de flasques.

Ces objets, caractéristiques et avantages de la présente invention seront exposés plus en détail dans la description suivante d'un mode de réalisation particulier, faite en relation avec les figures jointes, parmi lesquelles :

les figures 1 et 2, décrites précédemment, ont été utilisées pour exposer l'état de la technique ;

la figure 3 représente une vue de face partiellement en coupe d'un dispositif de fixation de vanne selon la présente invention ; et

les figures 4A, 4B et 4C représentent des vues en coupe selon les lignes A-A, B-B et C-C, respectivement, de la figure 3.

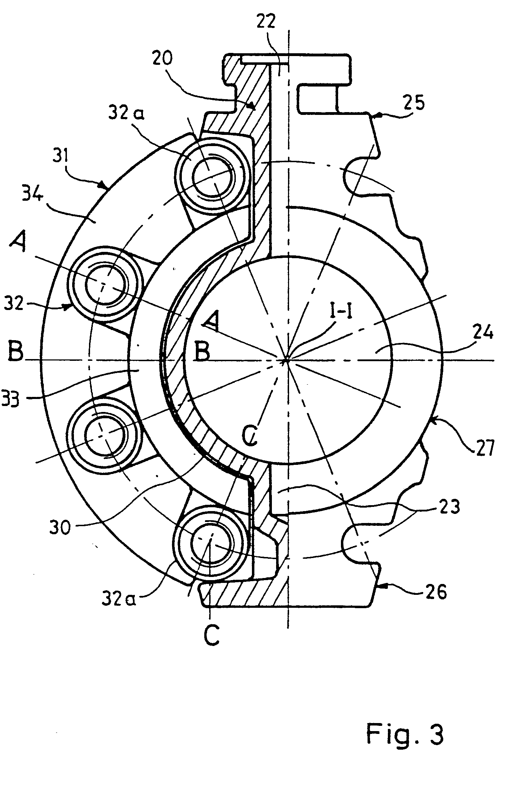

La figure 3 représente une vanne 20 associée à un dispositif de fixation selon la présente invention. La partie de droite de la figure 3 est une vue de face et la partie de gauche est une vue partiellement en coupe et partiellement écorchée.

La vanne de la figure 3 est par exemple une vanne du type papillon, comprenant un alésage radial 22 pour laisser passer une tige de manœuvre du papillon et un alésage radial 23 pour laisser passer l'axe de pivotement de ce papillon (non représenté). L'alésage axial principal de la vanne est désigné par la référence 24. C'est cet alésage qui doit être disposé dans le prolongement des tuyaux pour réguler le débit de fluide. Ainsi, de façon générale, comme le représente la figure 3, une vanne papillon a une forme globalement annulaire avec des parties dissymétriques dans le prolongement l'une de l'autre pour le passage de la tige de manœuvre et de son support de pivotement. Mais, à part ces deux protubérances désignées par les références 25 et 26, qui constituent les zones d'actionnement, on peut considérer que la vanne comporte une face latérale périphérique 27 de forme générale cylindrique. A la périphérie de cette vanne et dans sa face latérale 27 cyclindrique, est ménagée une rainure 30 propre à recevoir, par emboîtement, des portions de flasques rapportées 31. Dans la figure, seule une portion de flasque sensiblement circulaire est représentée à la gauche de la vanne. La portion interne 33 de flasque est emboîtée dans la rainure 30, et se glisse à ses extrémités sous des ailettes correspondant aux parties 25 et 26 susmentionnées du corps de la vanne.

La portion externe 34 de flasque rapporté 31 comprend des protubérances axiales 32 munies d'alésages destinés à s'accoupler avec les brides telles que les brides 4 et 6 représentées en figure 1. Ces protubérances 32 ont une épaisseur (ou profondeur axiale) légèrement inférieure à celle de la vanne 20, c'est-à-dire légèrement inférieure à la distance entre les brides 4 et 6 de la figure 1. On notera que les protubérances 32a au niveau de chaque extrémité de la portion de flasque 31 peuvent avoir une forme particulière pour faciliter leur insertion et leur blocage sous les ailettes du corps de flasque.

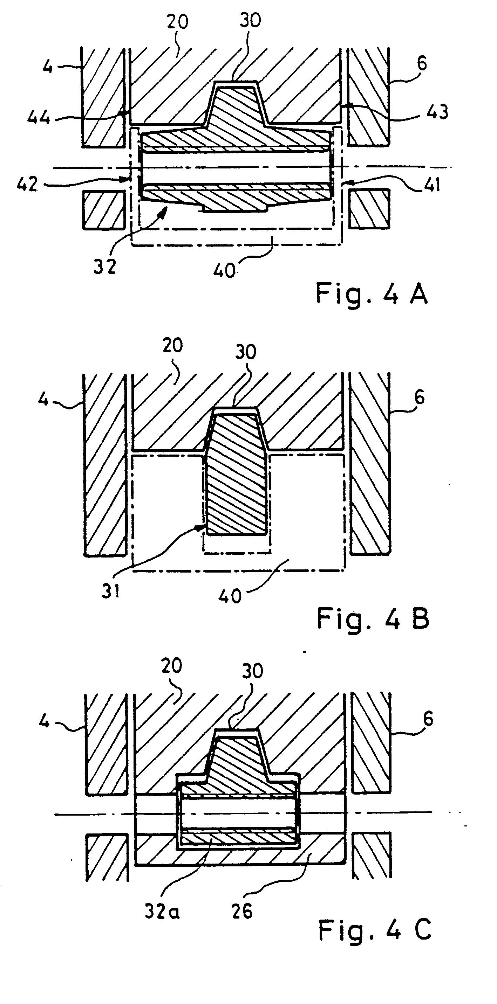

La figure 4A représente une coupe selon la ligne A-A de la figure 3, c'est-à-dire une coupe selon une protubérance. On peut y voir les brides 4 et 6 telles que représentées en figure 2 et la rainure 30 ménagée dans le corps de vanne 20. La rainure 30 a une section tronconique pour faciliter l'insertion des portions intérieures 33 des flasques 31 dont la face intérieure a une forme complémentaire.

Les mêmes références désignent les mêmes éléments en figure 4B et 4C, la figure 4B étant une vue en coupe selon la ligne B-B entre deux protubérances et la figure 4c étant une vue en coupe selon la ligne C-C de la figure 3 au niveau d'une protubérance extrême 32a. La protubérance 32 a une forme particulière adaptée à la forme du corps de vanne au voisinage de la zone de manœuvre.

Les figures 3 et 4A à 4C ayant été données uniquement à titre d'exemples particuliers de la présente invention, il convient de dégager que l'aspect essentiel de la présente invention est de prévoir sur une vanne un moyen d'accrochage périphérique pouvant supporter et maintenir axialement en force des portions de flasques, de préférence des flasques semi-annulaires telles que représentés. Ainsi, selon un autre mode de réalisation, le maintien axial peut être assuré par une partie en relief de la face latérale de vanne s'emboîtant sur une partie en creux des portions de flasques. Egalement, pour un constructeur de vannes, il sera possible pour une vanne ayant des caractéristiques d'écoulement données, de rajouter des flasques de types différents selon les conduites auxquelles doit être raccordée cette vanne ou bien selon les normes imposées par le pays de vente. Des mêmes flasques peuvent éventuellement servir pour des vannes différentes. Un avantage essentiel de la présente invention est donc de réduire le stock de vannes et le nombre d'opérations différentes que doit prévoir un fabricant de vannes ou encore un service d'achat important constituant lui-même ses stocks.

Selon un autre avantage de la présente invention, étant donné que peu de contraintes sont exercées sur la vanne puisque la fixation est faite régulièrement entre la vanne et les portions de flasque sur une large partie de la périphérie de la vanne, il n'est pas nécessaire de prévoir pour la fabrication de la vanne un matériau de résistance mécanique élevée et le corps de vanne peut par exemple être fabriqué en fonte. Par contre, les flasques rapportées de fixation seront de préférence constituées d'un matériau à forte résistance mécanique, par exemple de l'acier. Ceci entraîne une économie de fabrication par rapport aux procédés de l'art antérieur dans lesquels on était amené à fabriquer tout le corps de vanne en un matériau à forte résistance mécanique.

Enfin, la présente invention apporte une simplification et une diminution du risque d'altération en cours de montage. En effet, ce sont les flasques rapportés, éventuellement associés à des cales de montage, telles que la cale 40 représentée en traits mixtes sur les figures 4A et 4B, qui sont insérés entre les tuyaux entre lesquels on veut disposer la vanne pour permettre la soudure à ces tuyaux de brides de la façon décrite précédemment. La cale 40 est réalisée en une matière susceptible de supporter sans déformation l'élévation de température lors des opérations de soudage ou de brasage. La cale est conformée, comme le représentent les figures, pour s'adapter autour du flasque rapporté et définir des flancs extrêmes 41 et 42 parallèles dont l'écartement est sensiblement le même que l'écartement des faces extrêmes 43 et 44 de la vanne. Lors du soudage, les brides sont ainsi maintenues dans la position désirée. Une fois cette opération de soudure des brides effectuée, les flasques rapportés sont montés sur la vanne appropriée et celle-ci est mise en place, par exemple par vissage de boulons passant dans des alésages des brides et se vissant dans les aléages des portions de flasques préalablement taraudés. On évite ainsi des opérations de manutention de la vanne lors du montage et des risques d'altération de celle-ci par échauffement.

**Revendications**

1. Dispositif de fixation d'une vanne à une conduite de fluide, à l'extrémité d'une conduite ou entre deux conduites, chaque extrémité de conduite étant solidaire d'une bride annulaire, la vanne comprenant une face latérale périphérique (27) et deux faces extrêmes (43, 44), caractérisé en ce que :
— le dispositif comprend des portions de flasques (31) adaptables selon leur face intérieure (33) sur la face latérale périphérique (27) de vanne en dehors de ses zones d'actionnement,
— la face latérale périphérique (27) de vanne et la face intérieure (33) de portion de flasque comprennent des portions engageantes (30, 33) correspondantes pouvant s'emboîter l'une dans l'autre de façon que, lorsque la portion de flasque est plaquée contre la face latérale périphérique de vanne, les parties engageantes limitent le déplacement axial relatif de la vanne par rapport à la portion de flasque,
— l'ensemble de ces portions de flasques comporte des protubérances axiales (32) munies d'alésages qui se trouvent en regard d'alésages correspondants de la ou des brides annulaires une fois les portions de flasques positionnées en appui contre la face latérale périphérique (27) de vanne avec les parties engageantes correspondantes emboîtées les unes dans les autres.

2. Dispositif selon la revendication 1, caractérisé en ce que la vanne comporte une rainure périphérique (30) en dehors de ses zones d'actionnement, et en ce que ce dispositif comprend des portions de flasques (31) venant se loger dans ladite rainure.

3. Dispositif de fixation d'une vanne à une conduite de fluide selon l'une des revendications 1 ou 2, caractérisé en ce que chaque portion de flasque (31) est constituée d'un flasque sensiblement semi-annulaire.

4. Dispositif de fixation d'une vanne à une conduite de fluide selon l'une quelconque des revendications 1 à 3, caractérisé en ce que chaque portion de flasque comprend une zone interne (33) comportant les parties engageantes pour s'emboîter sur la face périphérique (27) de vanne et ayant une première épaisseur, et comprend au moins une zone externe (34) dans laquelle sont ménagés. les alésages, cette zone ayant une épaisseur seulement légèrement inférieure à l'épaisseur totale de la vanne.

5. Dispositif de fixation d'une vanne à une conduite de fluide selon l'une des revendications 1 à 4, caractérisé en ce que les portions de flasque et la vanne sont en des matériaux distincts.

6. Dispositif de fixation d'une vanne à une conduite de fluide selon l'une quelconque des revendications 1 à 5, caractérisé en ce que lesdits alésages des portions de flasque sont taraudés.

7. Dispositif de fixation d'une vanne à une conduite de fluide selon la revendication 2, caractérisé en ce que les portions de flasque sont introduites dans ladite rainure.

8. Procédé de fixation d'une vanne à une conduite de fluide, à l'extrémité d'une conduite ou entre deux conduites, caractérisé en ce qu'il comprend les étapes suivantes :

— prévoir des portions de flasques fixables à la périphérie d'une vanne, ces portions de flasque comprenant des alésages dont la profondeur est inférieure à celle de la vanne, ces alésages étant répartis selon une couronne ;

— prévoir au moins une bride fixable à l'extrémité d'une conduite ;

— pré-assembler provisoirement ladite bride et lesdites portions de flasques, avec interposition de cales définissant une profondeur totale sensiblement égale à celle de la vanne ;

— fixer chaque bride à chaque extrémité de conduite ;

— enlever une partie au moins les portions de flasque et les cales, pour laisser un passage latéral permettant l'insertion ultérieure de la vanne ;

— insérer l'ensemble de la vanne et des portions de flasques positionnées dans celle-ci ; et

— fixer les brides aux portions des flasques montées.

**Claims**

1. Device for securing a valve to a fluid conduit, at the extremity of a conduit or between two conduits, each conduit extremity being integral with an annular flange, the valve comprising a peripheral side surface (27) and two end faces (43, 44) characterized in that :

— the device comprises flange portions (31) with their inner surfaces (33) adapted to fit on the peripheral side surface (27) of the valve outside its working areas ;

— the peripheral valve side surface (27) and the inward surface (33) of the flange portions comprise corresponding engaging portions (30, 33) able to fit one within the other in such a way that when the flange portion is thrust against the circumferential valve side surface, the engaging parts limit the relative axial displacement of the valve with respect to the flange portion ;

— the set of these flange portions comprises axial projections (32) provided with bores which are aligned with corresponding bores of the annular flange or flanges once the flange portions have been placed in contact against the peripheral valve side surface (27), with the corresponding engaging parts fitted into one another.

2. Device according to claim 1, characterized in that the valve comprises a peripheral groove (30) outside its working areas, and in that this device comprises flange portions (31) fitting into the said groove.

3. Device for securing a valve to a fluid conduit according to one of claims 1 or 2, characterized in that each flange portion (31) is formed by a substantially semi-circular flange.

4. Device for securing a valve to a fluid conduit according to any one of claims 1 to 3, characterized in that each flange portion comprises an inner section (33) having the engaging elements to fit on the peripheral valve surface (27) and having a first thickness, and comprises at least one outer section (34) wherein are formed the bores, this section having a thickness only slightly less than the overall thickness of the valve.

5. A device for securing a valve to a fluid conduit according to one of claims 1 to 4, characterized in that the flange portions and the valve are of different materials.

6. A device for securing a valve to a fluid conduit according to any one of claims 1 to 5, characterized in that the said bores of the flange portions are tapped.

7. A device for securing a valve to a fluid conduit according to claim 2, characterized in that the flange portions are inserted into the said groove.

8. Method of securing a valve to a fluid conduit, at the extremity of a conduit or between two conduits, characterized in that it comprises the following steps :

— providing flange portions securable to the periphery of a valve, these flange portions comprising bores the depth of which is smaller than that of the valve, these bores being distributed in a ring ;

— providing at least one flange securable to the extremity of a conduit ;

— provisionally pre-assembling the said flange and the said flange portions, with interpositioning of spacers defining an overall depth substantially equal to that of the valve ;

— attaching each flange to each conduit extremity ;

— removing at least a part of these flange portions and the spacers to leave open a lateral passage allowing the subsequent insertion of the valve ;

— inserting the valve assembly and the flange portions positioned therein, and
— fastening the flanges to the assembled flange portions.

## Patentansprüche

1. Vorrichtung zum Befestigen eines Ventils an einem Rohr für Fluidum, an dem Ende eines Rohres oder zwischen zwei Rohren, wobei jedes Ende des Rohres fest mit einem ringförmigen Flanschring verbunden ist, und wobei das Ventil eine umfängliche Längsfläche (27) und zwei Endflächen (43, 44) aufweist, dadurch gekennzeichnet,

— daß die Vorrichtung Flanschteile (31) aufweist, welche mit ihrer Innenfläche (33) auf die umfängliche Längsfläche (27) des Ventils außerhalb seines Betriebsbereiches anpaßbar sind,

— daß die umfängliche Längsfläche (27) des Ventils und die Innenfläche (33) des Flanschteils übereinstimmende Eingriffsteile (30, 33) aufweisen, welche derart ineinander passen können, daß wenn der Flanschteil gegen die umfängliche Längsfläche des Ventils gedrückt wird, die Eingriffsabschnitte den axialen relativen Versatz des Ventils in Bezug auf den Flanschteil beschränken,

— daß die Gesamtheit der Flanschteile axiale, mit Bohrungen versehene Ausstülpungen (32) aufweist, die sich gegenüber entsprechenden Bohrungen des ringförmigen Bundringes oder der ringförmigen Flanschringe befinden, sobald die Flanschteile in Abstützung gegen die umfängliche Längsfläche (27) des Ventils mit den ineinander passenden, übereinstimmenden Eingriffsabschnitten positioniert sind.

2. Vorrichtung nach Anspruch 1, dadurch gekennzeichnet, daß das Ventil eine umfängliche Vertiefung (30) außerhalb seiner Betriebsbereiche aufweist, und daß diese Vorrichtung Flanschteile (31) aufweist, welche in dieser Vertiefung gelagert sind.

3. Vorrichtung zum Befestigen eines Ventils an einem Rohr für Fluidum nach einem der Ansprüche 1 oder 2, dadurch gekennzeichnet, daß jeder Flanschteil (31) aus einem im wesentlichen halbringförmigen Flansch gebildet ist.

4. Vorrichtung zum Befestigen eines Ventils an einem Rohr für Fluidum nach einem der Ansprüche 1 bis 3, dadurch gekennzeichnet, daß jeder Flanschteil einen Innenbereich (33) aufweist, welcher die Eingriffsabschnitte umfaßt, um sich an die umfängliche Fläche (27) des Ventils anzupassen, und welcher eine erste Dicke aufweist, und welcher mindestens einen Außenbereich (34) aufweist, in welchem die Bohrungen angeordnet sind, wobei dieser Bereich eine Dicke aufweist, welche nur etwas kleiner als die Gesamtdicke des Ventils ist.

5. Vorrichtung zum Befestigen eines Ventils an einem Rohr für Fluidum nach einem der Ansprüche 1 bis 4, dadurch gekennzeichnet, daß die Flanschteile und das Ventil aus unterschiedlichen Materialen bestehen.

6. Vorrichtung zum Befestigen eines Ventils an einem Rohr für Fluidum nach einem der Ansprüche 1 bis 5, dadurch gekennzeichnet, daß die Bohrungen der Flanschteile mit Innengewinden versehen sind.

7. Vorrichtung zum Befestigen eines Ventils an einem Rohr für Fluidum nach Anspruch 2, dadurch gekennzeichnet, daß die Flanschteile in die Vertiefung eingeführt sind.

8. Verfahren zum Befestigen eines Ventils an einem Rohr für Fluidum, an Ende eines Rohres oder zwischen zwei Rohren, dadurch gekennzeichnet, daß es die folgenden Stufen aufweist:

— Verwenden von an dem Umfang eines Ventils fixierbaren Flanschteile, wobei diese Flanschteile Bohrungen aufweisen, deren Tiefe geringer ist als jene des Ventils, wobei diese Bohrungen kronenförmig verteilt sind;

— Verwenden von mindestens einem am Ende eines Rohres fixierbaren Flanschring;

— vorläufiges Vermontieren des Flanschringes und der Flanschteile, mit Zwischenanordnen von Keilen, welche eine gesamte Tiefe bestimmen, welche der des Ventils im wesentlichen gleicht;

— jeden Flanschring an jedem Rohrende fixieren;

— Wegnehmen mindestens eines Abschnitts der Flanschteile und der Keile, um einen seitlichen Durchgang zu bilden, welcher die spätere Einlagerung des Ventils erlaubt;

— die Gesamtheit des Ventils und der Flanschteile welche in diesem positioniert sind, einfügen; und

— die Flanschringe an den montierten Flanschteilen fixieren.

Fig.1

Fig. 2

1

Fig. 3

Fig. 4 A

Fig. 4 B

Fig. 4 C